(19) Europäisches Patentamt
European Patent Office
Office européen des brevets

(11) Veröffentlichungsnummer: **0 450 439 B1**

(12) **EUROPÄISCHE PATENTSCHRIFT**

(45) Veröffentlichungstag der Patentschrift: **23.11.94**

(51) Int. Cl.[5]: **C08G 18/02**, C08G 18/79, C08K 5/13, C08G 18/42

(21) Anmeldenummer: **91104624.1**

(22) Anmeldetag: **23.03.91**

Die Akte enthält technische Angaben, die nach dem Eingang der Anmeldung eingereicht wurden und die nicht in dieser Patentschrift enthalten sind.

(54) **Polyester und Polyesterurethane.**

(30) Priorität: **05.04.90 DE 4010959**

(43) Veröffentlichungstag der Anmeldung:
**09.10.91 Patentblatt 91/41**

(45) Bekanntmachung des Hinweises auf die Patenterteilung:
**23.11.94 Patentblatt 94/47**

(84) Benannte Vertragsstaaten:
**AT BE CH DE DK ES FR GB GR IT LI LU NL SE**

(56) Entgegenhaltungen:
**EP-A- 0 197 789**
**EP-A- 0 357 194**
**DE-A- 1 190 180**
**DE-A- 1 190 181**
**DE-A- 1 494 009**
**GB-A- 1 047 609**
**GB-A- 1 204 866**

(73) Patentinhaber: **RHEIN-CHEMIE RHEINAU GmbH**
**Düsseldorfer Strasse 23-27**
**D-68219 Mannheim (DE)**

(72) Erfinder: **Volker, Ullrich, Dr.**
**Rappenbuckelweg 4**
**W-6905 Schriesheim (DE)**

(74) Vertreter: **Gremm, Joachim, Dr. et al**
**Bayer AG**
**Konzernverwaltung RP**
**Patente Konzern**
**D-51368 Leverkusen (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 450 439 B1

## Beschreibung

Die Erfindung betrifft Polyester und Polyesterurethane, die gegen Verfärbung oder hydrolytischen Abbau geschützt sind. Gleichzeitig wird die abgespaltete Isocyanatmenge in Polyesterurethanen erheblich reduziert.

Es war bisher bekannt, aromatische Polycarbodiimide Polyestern und Polyesterurethanen zuzusetzen, um diese gegen hydrolytischen Abbau zu schützen. Bei der Verarbeitung dieser thermoplastischen oder elastomeren Chemiewerkstoffe, z.B. durch Spritzgießen und/oder Extrusion treten Verarbeitungstemperaturen bis zu 300 °C auf. Bei diesen Temperaturen zersetzen sich die aromatischen Carbodiimide und verfärben die Kunststoffe, in denen sie enthalten sind.

Es wurde gefunden, daß sich diese Verfärbung durch den Zusatz kleiner Mengen von Benzohydrochinon- oder Naphthohydrochinon-Derivaten neben den aromatischen Polycarbodiimiden vermeiden läßt.

Gegenstand der Erfindung sind somit gegen Hydrolyse und Verfärbungen stabilisierte Polyester und Polyesterpolyurethane, die als Stabilisatoren 0,5 bis 4 Gew.-%, bezogen auf Polyester bzw. Polyesterurethan, eines aromatischen Carbodiimids und 0,01 bis 1,5 Gew.-% eines Benzohydrochinon- oder Naphthohydrochinon-Derivats enthalten.,

Polyester im Sinne der Erfindung sind Polyethylenterephthalat, Polybutylenterephthalat sowie thermoplastische Polyetheresterelastomere, Polyesterurethane im Sinne der Erfindung sind solche Urethane, welche neben Polyetherbindungen hydrolysierbare Polyesterbindungen enthalten, z.B. aus Adipinsäure und Ethylenoxid und/oder Polypropylenoxid bzw. Butandiol.

Aromatische Polycarbodiimide im Sinne der Erfindung sind 2,2', 6,6' -Tetraisopropyldiphenylcarbodiimid, besonders bevorzugt sind homopolymere Carbodiimide aus 1,3,5-Triisopropyl-2,4-diisocyanatobenzol und heteropolymere Carbodiimide ausgehend von 1,3,5-Triisopropyl-2,4-diisocyanatobenzol und 2,6-Diisopropylphenylisocyanat bzw. Gemische daraus. Benzohydrochinon- bzw. Naphthohydrochinon-Derivate sind Verbindungen der allgemeinen Formeln (I) und (II),

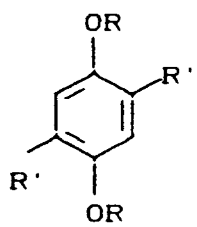

(I)

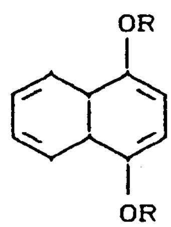

(II)

worin

R  Wasserstoff oder $C_1$-$C_4$-Alkyl und

R'  $C_1$-$C_4$-Alkyl

bedeutet.

Bevorzugte Benzohydrochinon und Naphthohydrochinon-Derivate sind 2,5-Di-tert.-butyl-benzohydrochinon-1,4 und 2-tert.-Butyl-benzohydrochinon-1,4.

Die erfindungsgemäßen, gegen Hydrolyse und Verfärbung stabilisierten Massen, können wie folgt hergestellt werden:

Die Polyester mit einem $H_2O$-Gehalt ≦ 0,03 %, das aromatische Carbodiimid und Hydrochinon-Derivat werden bei Raumtemperatur miteinander vermengt und über einen Zweischneckenkneter bei der Schmelztemperatur des Polyesters extrudiert. Die Massen können alternativ dazu getrennt in den Knetraum des Extruders dosiert werden und anschließend homogen in der Schmelze verteilt werden. Die Schmelze wird nach dem Extrudieren gekühlt, granuliert und getrocknet. Das so erhaltene Granulat hat einen $H_2O$-Gehalt ≦ 0,03 %.

Durch den Einsatz eines o.g. Stabilisators wird die Verfärbung des Polyesters verhindert und die Menge des aus diesen System durch Tempern abgespaltenen Isocyanates erheblich reduziert.

Beispiel 1:

Polyethylenterephthalat und ein aromatisches Carbodiimid werden sowohl mit als auch ohne Stabilisator miteinander vermischt und extrudiert. Die Proben werden anschließend 1h bei 80 °C getrocknet. Zur Messung der Isocyanatabspaltung wird das Granulat über die angegebene Zeit im geschlossenen Behälter getempert. Die abgespaltetene Isocyanatmenge wird durch GC gegen Standard ermittelt.

Rezepturen:

1. 98 % Polyethylenterephthalat 2 % 2,2',6,6'-Tetraisopropyldiphenylcarbodiimid
2. 98 % Polyethylenterephthalat 2 % heteropolymeres Carbodiimid aus 1,3,5-Triisopropyl-2,4-diisocyanatobenzol und 2,6-Di isopropylphenylisocyanat
3. 97,9 % Polyethylenterephthalat 86 2 % heteropoly meres Carbodiimid aus 1,3,5-Triiso propyl-2,4-diisocyanatobenzol und 2,6-Diisopropylphenylisocyanat 0,1 % Stabilisator

Messung A. ungemahlenes Zylindergranulat 3,5 mmx3,5 mm

| | | 1 | 2 | 3 |
|---|---|---|---|---|
| 3 h 160° C 2,6-Diisopropylphenyliso-cyanat) | ppm | 600 | 55 | 50 |
| 1,3,5-Triisopropyl-2,4-di-isocyanatobenzol) | ppm | - | 360 | 115 |
| 4 h 150° C 2,6-Diisopropylphenyliso-cyanat) | ppm | 170 | 30 | 20 |
| 1,3,5-Triisopropyl-2,4-di-isocyanatobenzol) | ppm | - | 200 | 15 |

Messung B: gemahlenes Granulat Teilchengröße ca. 2 $mm^3$

| | | 1 | 2 | 3 |
|---|---|---|---|---|
| 4 h 150° C 2,6-Diisopropylphenyliso-cyanat) | ppm | 1300 | 140 | 90 |
| 1,3,5-Triisopropyl-2,4-di-isocyanatobenzol) | ppm | - | 600 | 110 |

Beispiel 2

97,47 g Polyethylenterephthalat, 2,5 g (aromatisches Polycarbodiimid) und 0,03 g 2,5-Di-tert.-butyl-(benzohydrochinon-1,4) werden zu einer Formmasse verarbeitet, indem Carbodiimid und Benzochinon-Derivat zuerst gemischt und dann zusammen mit dem Polyethylenterephthalat auf einen Doppelschneckenextruder bei 230 °C-300 °C extrudiert. Dieses Material zeigt auch unter längerer Temperaturbelastung zwischen 230 °C und 300 °C und bei der Kristallisation keine Verfärbungen.

Beispiel 3

84,7 g Polyethylenterephthalat, 15,0 g (aromatisches Polycarbodiimid) und 0,3 g (Benzohydrochinon-Derivat) werden wie im Beispiel 1 gemischt. Die erhaltene Masse hat folgende Eigenschaften:
Dichte ca. 1,1 g/$cm^3$
Kristallitsmp. ca. 250 °C
$N_2$-Gehalt ≧ 0,25 %
Aus diesem Material hergestellte Körper sind gegenüber einem nicht mit einem Antioxidant stabilisierten Körper deutlich weniger verfärbt. Nach der Cielab Farbmeßmethode ergeben sich folgende Differenzen:
DL = 9-10
DA = 2-4
DB = 4-5

**Patentansprüche**

1. Polyester oder Polyesterurethane, enthaltend 0,5 bis 4 Gew.-% eines aromatischen Carbadiimids und 0,01 bis 1,5 Gew.-% eines Benzohydrochinon- oder Naphthohydrochinon-Derivats. der allgemeinen Formeln (I) und (II),

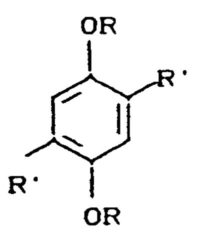

(I)

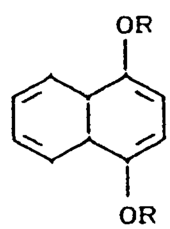

(II)

worin
R Wasserstoff oder $C_1$-$C_4$-Alkyl und
R' $C_1$-$C_4$-Alkyl
bedeutet.

**Claims**

1. Polyesters or polyester urethanes containing 0.5 to 4% by weight of an aromatic carbodiimide and 0.01 to 1.5% by weight of a benzohydroquinone or naphthohydroquinone derivative corresponding to general formulae (I) and (II):

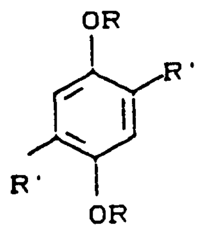

(I)

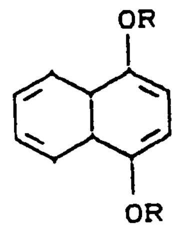

(II)

in which

R is hydrogen or $C_{1-4}$ alkyl and

R' is $C_{1-4}$ alkyl.

## Revendications

1. Polyesters ou polyesteruréthannes contenant 0,5 à 4 % en poids d'un carbodiimide aromatique et 0,01 à 1,5 % en poids d'un dérivé de benzohydroquinone ou de naphtohydroquinone de formules générales I et II :

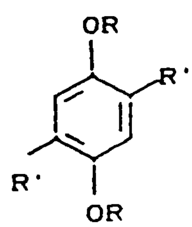

(I)

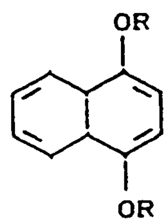

(II)

dans lesquelles

R est l'hydrogène ou un alkyle en $C_1$-$C_4$ et

R' est un alkyle en $C_1$-$C_4$.